# EUROPEAN PATENT SPECIFICATION

(11) **EP 4 260 663 B1**
(45) Date of publication and mention of the grant of the patent: **24.07.2024**
(21) Application number: 21823234.6
(22) Date of filing: 29.11.2021
(51) Int. Cl.: H05B 47/155, H04N 21/00

(54) **DETERMINING LIGHT EFFECTS IN DEPENDENCE ON WHETHER AN OVERLAY IS LIKELY DISPLAYED ON TOP OF VIDEO CONTENT**
BESTIMMUNG VON LICHTEFFEKTEN IN ABHÄNGIGKEIT DAVON, OB AUF EINEM VIDEOINHALT WAHRSCHEINLICH EINE ÜBERLAGERUNG ANGEZEIGT WIRD
DÉTERMINATION DES EFFETS DE LUMIÈRE EN FONCTION DE LA PROBABILITÉ QU'UNE SUPERPOSITION SOIT AFFICHÉE AU-DESSUS D'UN CONTENU VIDÉO

(30) Priority: 08.12.2020 EP 20212519
(43) Date of publication of application: 18.10.2023
(73) Proprietor: Signify Holding B.V., 5656 AE Eindhoven (NL)
(72) Inventor: KRAJNC, Hugo, José, 5656 AE Eindhoven (NL)
(74) Representative: Verweij, Petronella Daniëlle
(86) International application number: PCT/EP2021/083296
(87) International publication number: WO 2022/122437

(56) References cited:
- EP-A1- 3 331 325
- WO-A1-2020/165088
- US-B1- 9 483 982

## Description

### FIELD OF THE INVENTION

The invention relates to a system for determining one or more light effects based on an analysis of video content and controlling one or more lighting devices to render said one or more light effects.

The invention further relates to a method of determining one or more light effects based on an analysis of video content and controlling one or more lighting devices to render said one or more light effects.

The invention also relates to a computer program product enabling a computer system to perform such a method.

### BACKGROUND OF THE INVENTION

Philips' Hue Entertainment and Hue Sync have become very popular among owners of Philips Hue lights. Philips Hue Sync enables the rendering of light effects based on the content that is played on a computer, e.g. video games. Furthermore, Ambilight has become one of the most distinguishing features of Philips TVs. Ambilight renders light effects based on the content that is played on the TV. A dynamic lighting system can dramatically influence the experience and impression of audio-visual material, especially when the colors sent to the lights match what would be seen in the composed environment around the screen.

This new use of light can bring the atmosphere of a video game or movie right into the room with the user. For example, gamers can immerse themselves in the ambience of the gaming environment and enjoy the flashes of weapons fire or magic spells and sit in the glow of the force fields as if they were real. Hue Sync works by observing areas of the video content and computing light output parameters that are rendered on Hue lights around the screen. When the entertainment mode is active, the selected lighting devices in a defined entertainment area will play light effects in accordance with the content depending on their positions relative to the screen.

Initially, Hue Sync was only available as an application for PCs. An HDMI device called the Hue Play HDMI Sync Box was later added to the Hue entertainment portfolio. This device addresses one of the main limitations of Hue Sync and aims at streaming and gaming devices connected to the TV. It makes use of the same principle of an entertainment area and the same mechanisms to transport information.

The Philips Hue Play HDMI Sync Box consists of a box to which different HDMI inputs can be connected (e.g. gaming console, set top box, PC, etc.). This device is in principle a HDMI splitter which is placed between any HDMI device and a TV. The signals received on the HDMI inputs are then transmitted unmodified to the display device to show the content as intended but, in the process, they get analyzed and key content is extracted to determine light effects.

A drawback of the current Hue Play HDMI Sync Box is that although the light generating content may come from the different HDMI sources, additional content might be generated on the screen by the TV itself. For example, if the user interacts with menus of the TV (e.g. settings, volume, etc.), these will not get analyzed, and as a result, the screen content and the light effects might differ. On the other hand, menus triggered from the original content source (e.g. gaming console menus) do get carried via the (in this case HDMI) input and do generate appropriate light effects. For menus received on the input, it might even be possible to disregard the OSD layer when generating the light effects, as disclosed in US 2015/092115 A1.

US 9 483 982 B1 discloses an apparatus for customizing backlighting of a television set. The apparatus receives signals from a remote control to allow a user to change the color and/or intensity of background lighting.

Ultimately, the fact that menus of the TV do not get analyzed leads to an inconsistency on how menus, or overlays in general, are dealt with. The user might prefer prioritizing content over menus, such that no menus ever trigger light effects (or the light effects are paused/cancelled), while others will prefer to always having a consistent mapping between menus and light effects, such that all menus should be acknowledged by the entertainment system.

### SUMMARY OF THE INVENTION

It is a first object of the invention to provide a system, which can be used to reduce the number of inconsistencies between screen content and light effects.

It is a second object of the invention to provide a method, which can be used to reduce the number of inconsistencies between screen content and light effects.

In a first aspect of the invention, a system for determining one or more light effects based on an analysis of video content and controlling one or more lighting devices to render said one or more light effects, comprises at least one input interface, at least one output interface, and at least one processor configured to receive a video signal via said at least one input interface, said video signal comprising said video content, output, via said at least one output interface, said video signal to a display device for displaying said video content, receive a further signal via said at least one input interface, said further signal being indicative of one or more commands transmitted by a further device to said display device, determine, based on said further signal, whether said display device will likely display an overlay on top of said video content, determine said one or more light effects based on said analysis of said video content in dependence on whether said display device will likely display an overlay on top of said video content, and control, via said at least one output interface, said one or more lighting devices to render said one or more light effects.

As it may not be possible to obtain information from the display device as to whether it is displaying an overlay on top of the video content provided it, the system determines whether the display device will likely display an overlay on top of the video content by 'sniffing' commands transmitted to the display device, e.g. by a remote control or mobile device. This makes it possible to determine light effects for screen content, and deal with overlays, in a consistent manner, independent of which device generates the overlays.

Said at least one processor may be configured to, upon determining that said display device will likely display an overlay on top of said video content, determine one or more further light effects based on said analysis of said video content and based on content of said overlay and control, via said at least one output interface, said one or more lighting devices to render said one or more further light effects. Thus, these one or more further light effects are not determined based only on the video content, but also based on the content of the (likely displayed) overlay.

The one or more further light effects may be determined by first determining the (normal) one or more light effects based on the analysis of the video content and then adapting these one or more light effects. The adaptation of the one or more light effects may take into account what the overlay could do to the underlying screen content. For example, if the overlay is just changing the transparency of the content, then the intensity and saturation of the one or more light effects may be adapted. If a bright yellow overlay is displayed on an original dark background, then only the hue and the brightness of the light effects may be adapted.

Said at least one processor may be configured to, upon determining that said display device will likely display an overlay on top of said video content, control said one or more lighting devices to stop rendering light.

Said at least one processor may be configured to, upon determining that said display device will likely display an overlay on top of said video content, determine said one or more light effects such that a noticeability of said one or more light effects is gradually reduced. After said reduction, said one or more light devices may be controlled to stop rendering light or light may be rendered at a lower intensity, for example.

Said at least one processor may be configured to, upon determining that said display device will likely display an overlay on top of said video content, determine one or more default and/or user-defined light effects, and control, via said at least one output interface, said one or more lighting devices to render said one or more default and/or user-defined light effects. Said one or more default and/or user-defined light effects may comprise 50% warm light on all lighting devices, for example.

Said at least one processor may be configured to, upon determining that said display device will likely display an overlay on top of said video content, determine one or more further light effects associated with said overlay, and control, via said at least one output interface, said one or more lighting devices to render said one or more further light effects. For example, if it is determined than an EPG is likely displayed on the display device and the EPG of this display device has blue as dominant color, a blue or blueish light effect may be rendered.

Said at least one processor may be configured to, upon determining that said one or more commands instruct said display device to exit a menu, determine said one or more light effects based on said analysis of said video content and control said one or more lighting devices to render said one or more light effects. An exit menu command may indicate that the menu has disappeared from the screen and therefore the received video content is what should be matched with the light effects.

Said at least one processor may be configured to determine said one or more light effects based on said analysis of said video content further in dependence on a size and/or shape of said overlay. For example, if an overlay, e.g. rendered in response to a volume control command, takes up little space, it may not be necessary to adapt the light effects. Furthermore, the shape of the overlay may impact what the overlay does to the underlying screen content. For example, a square white box on the mid-left of the screen will be quite noticeable to the human eye, but the same amount of "surface" of an overlay that is spread out along the outer edges of the screen might not be enough for a user to notice that the screen has changed colors. In the latter case, the user will not perceive inconsistencies between screen content and light effects, and it is therefore not necessary to adapt the one or more light effects.

Said at least one processor may be configured to determine whether said display device will likely display an overlay on top of said video content further based on data exchanged between said display device and one or more other devices. For example, if one or more Bluetooth (e.g. BLE) commands are transmitted to a display device by a remote control and then a burst of data is transmitted to the display device by a Wi-Fi access point, this may indicate that a certain type of menu is being displayed on the display device, e.g. an EPG.

Said at least one processor may be configured to determine whether said display device will likely display an overlay on top of said video content based on content of said one or more commands. If it is possible to decode the content of the further signal, and thus the content of the one or more commands, this is usually the easiest way of determining whether the display device will likely display an overlay on top of the video content.

Said at least one processor may be configured to determine whether said display device will likely display an overlay on top of said video content based on a quantity and/or type and/or duration of said one or more commands. If it is not possible to decode the content of the further signal, it may be possible in one or more of these other ways to determine whether the display device will likely display an overlay on top of the video content.

In a second aspect of the invention, a method of determining one or more light effects based on an analysis of video content and controlling one or more lighting devices to render said one or more light effects comprises receiving a video signal, said video signal comprising said video content, outputting said video signal to a display device for displaying said video content, receiving a further signal, said further signal being indicative of one or more commands transmitted by a further device to said display device, determining, based on said further signal, whether said display device will likely display an overlay on top of said video content, determining said one or more light effects based on said analysis of said video content in dependence on whether said display device will likely display an overlay on top of said video content, and controlling said one or more lighting devices to render said one or more light effects. Said method may be performed by software running on a programmable device. This software may be provided as a computer program product.

Moreover, a computer program for carrying out the methods described herein, as well as a non-transitory computer readable storage-medium storing the computer program are provided. A computer program may, for example, be downloaded by or uploaded to an existing device or be stored upon manufacturing of these systems.

A non-transitory computer-readable storage medium stores at least one software code portion, the software code portion, when executed or processed by a computer, being configured to perform executable operations for determining one or more light effects based on an analysis of video content and controlling one or more lighting devices to render said one or more light effects.

The executable operations comprise receiving a video signal, said video signal comprising said video content, outputting said video signal to a display device for displaying said video content, receiving a further signal, said further signal being indicative of one or more commands transmitted by a further device to said display device, determining, based on said further signal, whether said display device will likely display an overlay on top of said video content, determining said one or more light effects based on said analysis of said video content in dependence on whether said display device will likely display an overlay on top of said video content, and controlling said one or more lighting devices to render said one or more light effects.

As will be appreciated by one skilled in the art, aspects of the present invention may be embodied as a device, a method or a computer program product. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit", "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on a local computer, partly on the local computer, as a stand-alone software package, partly on the local computer and partly on a remote computer, or entirely on the remote computer or server. In the latter scenario, the remote computer may be connected to the local computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of devices, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

### BRIEF DESCRIPTION OF THE DRAWINGS

These and other aspects of the invention are apparent from and will be further elucidated, by way of example, with reference to the drawings, in which:
Fig. 1 is a block diagram of an embodiment of the system;
Fig. 2 is a flow diagram of a first embodiment of the method;
Fig. 3 is a flow diagram of a second embodiment of the method;
Fig. 4 is a flow diagram of a third embodiment of the method; and
Fig. 5 is a flow diagram of a fourth embodiment of the method; and
Fig. 6 is a flow diagram of a fifth embodiment of the method; and
Fig. 7 is a block diagram of an exemplary data processing system for performing the method of the invention.

Corresponding elements in the drawings are denoted by the same reference numeral.

### DETAILED DESCRIPTION OF THE EMBODIMENTS

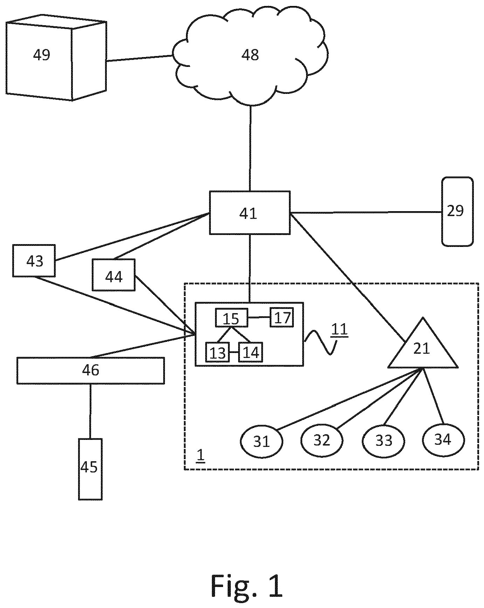

Fig. 1 shows an embodiment of the system for determining one or more light effects based on an analysis of video content and controlling one or more lighting devices to render the one or more light effects. In this embodiment, the system is an HDMI module 11. The HDMI module 11 may be a Hue Play HDMI Sync Box, for example.

In the example of Fig. 1, the HDMI module 11 is part of a lighting system 1. The lighting system 1 further comprises a bridge 21 and four wireless lighting devices 31-34. The bridge 21 may be a Hue bridge and the lighting devices 31-34 may be Hue lamps, for example. In the embodiment of Fig. 1, the HDMI module 11 can control the lighting devices 31-34 via the bridge 21. The bridge 21 communicates with the lighting devices 31-34 using a wireless communication protocol like e.g. Zigbee. In an alternative embodiment, the HDMI 11 can alternatively or additionally control the lighting devices 31-34 directly, e.g. via Bluetooth. In another embodiment, The HDMI module acts as a bridge. For example, the functionality of the HDMI module 11 and the bridge 21 may combined into a single device.

The HDMI module 11 is connected to a wireless LAN access point 41, e.g. using Wi-Fi. The bridge 21 is also connected to the wireless LAN access point 41, e.g. using Wi-Fi or Ethernet. In the example of Fig. 1, the HDMI module 11 communicates to the bridge 21 via the wireless LAN access point 41, e.g. using Wi-Fi. Alternatively or additionally, the HDMI module 11 may be able to communicate directly with the bridge 21 e.g. using Zigbee, Bluetooth or Wi-Fi technology, and/or may be able to communicate with the bridge 21 via the Internet/cloud.

The HDMI module 11 is connected to the display device 46 and local media receivers 43 and 44 via HDMI. The local media receivers 43 and 44 may comprise one or more streaming or content generation devices, e.g. an Apple TV, Microsoft Xbox One (or Series X or S) and/or Sony PlayStation 4 (or 5), and/or one or more cable or satellite TV receivers. Each of the local media receivers 43 and 44 may be able to receive content from a media server 49 and/or from a media server in the home network. The local media receivers 43 and 44 provide this content as a video signal to the HDMI module 11 via HDMI.

The wireless LAN access point 41 and media server 49 are connected to the Internet 48. Media server 49 may be a server of a video-on-demand service such as Netflix, Amazon Prime Video, Hulu, Disney+ or Apple TV+, for example. In the example of Fig. 1, the video signal is rendered on display device 46, e.g. a TV. Alternatively, the video signal may be rendered on multiple display devices, e.g. a video wall. A remote control 45 and/or a mobile device 29 are used to control the display device 46. The mobile device 29 may also be used to configure the lighting system 1 and control the lighting devices 31-34.

The HDMI module 11 comprises a receiver 13, a transmitter 14, a processor 15, and memory 17. The processor 15 is configured to receive a video signal via the receiver 13, e.g. from local media receiver 43 or local media receiver 44. The video signal comprises video content. The processor 15 is further configured to output the video signal to display device 46, which displays the video content, and to receive a further signal via receiver 13. The further signal is indicative of one or more commands transmitted by a further device, e.g. remote control 45 or mobile device 29, to the display device 46.

The processor 15 is further configured to determine, based on the further signal, whether the display device 46 will likely display an overlay on top of the video content, determine one or more light effects based on the analysis of the video content in dependence on whether the display device 46 will likely display an overlay on top of the video content, and control, via the transmitter 14, one or more of the lighting devices 31-34 to render the one or more light effects.

For example, the HDMI module 11 may sniff via IR, Wi-Fi, or BLE whether one or more commands are being issued to the display device 46 and determine whether those one or more commands are expected to result in an overlay being displayed on top of the video content that would have a relatively large impact on the light experience. The shape of the overlay, the size of the overlay, and/or other characteristics of the overlay (e.g. color and/or contrast) may be taken into account when determining the impact of the overlay on the light experience. For example, a small bright yellow menu overlaid on a dark movie will be more impactful than a large dark screen menu over footage of a football match which has light green grass over most of the screen.

If standardized commands are being used and can be recognized, then a simple look up table may be used to determine whether the command is for example a volume control command, which generally results in an overlay that takes up little space and therefore will not require light effects to be adapted, versus a menu/settings/guide command, which generally results in an overlay that takes up more screen space and would lead to light effects no longer matching the video content if no action would be taken.

If the commands are expected to result in a relatively large overlay being displayed on top of the video content, then the HDMI module 11 may choose to perform one of more of the following actions:
- Stop rendering light effects
- Gradually reduce the intensity/noticeability of the video-dependent light effects such that there are no large changes in effects immediately after the menu commands are detected but they disappear over time
- Set the lights to default/user-predefined light settings (e.g. 50% warm white on all lights)
- Generate light effects appropriate for the menu that is being displayed. This may be realized if the HDMI module 11 has access to a local or remote database which describes the type of screen content that gets generated during each type of menu. This database may also indicate the size and/or shape of the displayed overlay. The type of menu may be determined based on the sniffed command.

In the embodiment of Fig. 1, there is a direct connection between receiver 13 (e.g. an HDMI input port) and transmitter 14 (e.g. an HDMI output port). The video signal is received by receiver 13 and is then is split so that both transmitter 14 and processor 15 get the video signal simultaneously.

In the embodiment of the HDMI module 11 shown in Fig. 1, the HDMI module 11 comprises one processor 15. In an alternative embodiment, the HDMI module 11 comprises multiple processors. The processor 15 of the HDMI module 11 may be a generalpurpose processor, e.g. ARM-based, or an application-specific processor. The processor 15 of the HDMI module 11 may run a Unix-based operating system for example. The memory 17 may comprise one or more memory units. The memory 17 may comprise solid-state memory, for example.

The receiver 13 and the transmitter 14 may use one or more wired or wireless communication technologies such as Wi-Fi to communicate with the wireless LAN access point 41 and HDMI to communicate with the display device 46 and with local media receivers 43 and 44, for example. In an alternative embodiment, multiple receivers and/or multiple transmitters are used instead of a single receiver and a single transmitter. In the embodiment shown in Fig. 1, a separate receiver and a separate transmitter are used. In an alternative embodiment, functions of the receiver 13 and the transmitter 14 are realized by one or multiple transceiver(s) or a combination of receivers, transmitters and transceivers.

The HDMI module 11 may comprise other components typical for a consumer electronic device such as a power connector. The invention may be implemented using a computer program running on one or more processors. In the embodiment of Fig. 1, the system comprises a single device. In an alternative embodiment, the system comprises multiple devices.

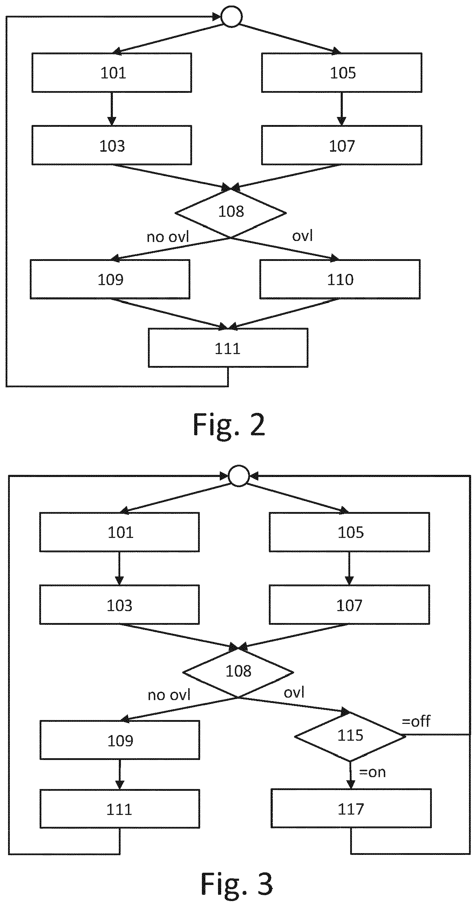

A first embodiment of the method of determining one or more light effects based on an analysis of video content and controlling one or more lighting devices to render the one or more light effects is shown in Fig. 2. A step 101 comprises receiving a video signal. The video signal comprises the video content. A step 103 comprises outputting the video signal received in step 101 to a display device for displaying the video content. A step 105 comprises receiving a further signal. The further signal is indicative of one or more commands transmitted by a further device to the display device. A step 107 comprises determining, based on the further signal received in step 105, whether the display device will likely display an overlay on top of the video content.

A step 108 comprises checking whether it was determined in step 107 that the display device will likely display an overlay on top of the video content. If so, a step 110 is performed. If not, a step 109 is performed. Step 109 comprises determining one or more light effects based on an analysis of the video content received in step 101. The light effects determined in step 109 are typically determined with a color extraction algorithm, which determines one or more dominant colors from one or more spatial regions of the video content.

Step 110 comprises determining one or more further light effects which are different from the light effects which would have been determined in step 109 when step 109 would have been performed. A step 111 comprises controlling the one or more lighting devices to render the one or more light effects determined in step 109 or the one or more further light effects determined in step 110. After step 111, step 101, and possibly step 105, is/are repeated and the method proceeds as shown in Fig. 2.

The light effects that are determined and according to which the lighting devices are then controlled, are thus different when it is determined that the display device will likely display an overlay on top of said video content compared to when it has not been determined that the display device will likely display an overlay on top of said video content. In this first embodiment, the light effects are determined based on the analysis of video content, and some of the light effects are amended, replaced or dropped based on the determination that the display device will likely display an overlay on top of said video content, and further additional light effects may be determined based on the determination that the display device will likely display an overlay on top of said video content.

A second embodiment of the method of determining one or more light effects based on an analysis of video content and controlling one or more lighting devices to render the one or more light effects is shown in Fig. 3. In this second embodiment, compared to the first embodiment of Fig. 2, step 110 has been replaced with steps 115 and 117.

Step 115 comprises determining whether the one or more lighting devices are rendering light. In this embodiment, this is typically only the case in step 115 when the overlay has only recently been 'detected' . If it is determined in step 115 that the one or more lighting devices are rendering light, step 117 is performed. If not, step 101, and possibly step 105, is/are repeated and the method proceeds as shown in Fig. 2. Step 117 comprises controlling the one or more lighting devices to stop rendering light. After step 117, step 101, and possibly step 105, is/are repeated and the method proceeds as shown in Fig. 2.

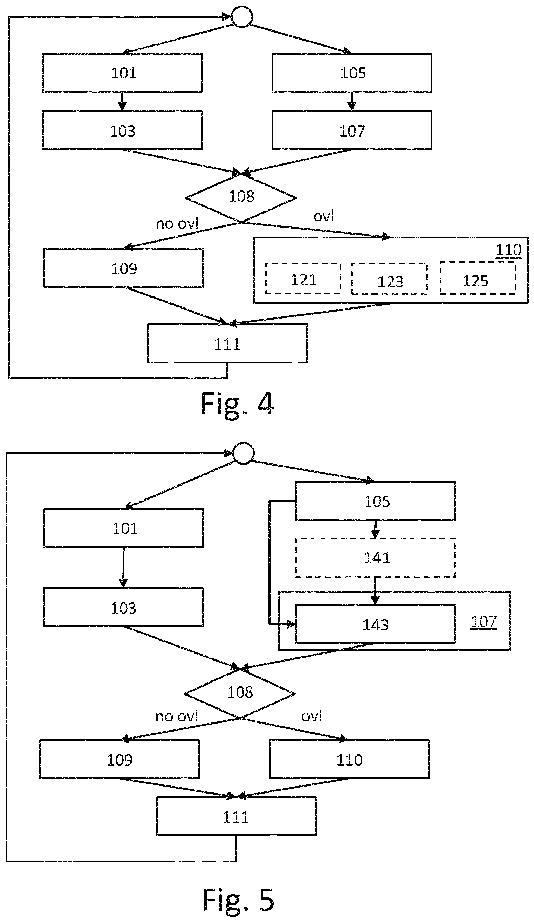

A third embodiment of the method of determining one or more light effects based on an analysis of video content and controlling one or more lighting devices to render the one or more light effects is shown in Fig. 4. In this third embodiment, compared to the first embodiment of Fig. 2, step 110 is implemented by a step 121, a step 123, or a step 125.

Step 121 comprises determining one or more light effects based on an analysis of video content like in step 109, but such that a noticeability of the one or more light effects is gradually reduced. After the gradual reduction, the rendering of light may be stopped or continued at a reduced level. Steps 109 and 121 may be performed by the same procedure. which is given either overlay=true or overlay=false as input parameter, for example.

Step 123 comprises determining one or more default and/or user-defined light effects. The one or more default and/or user-defined light effects may comprise 50% warm light on all lighting devices, for example. Step 125 comprises determining one or more further light effects associated with the overlay. For example, if it is determined than an EPG is likely displayed on the display device and the EPG of this display device has blue as dominant color, a blue or blueish light effect may be rendered.

A fourth embodiment of the method of determining one or more light effects based on an analysis of video content and controlling one or more lighting devices to render the one or more light effects is shown in Fig. 5. In this fourth embodiment, compared to the first embodiment of Fig. 2, step 107 is implemented by a step 143 and optionally, a step 141 is performed between steps 105 and 107. Optional step 141 comprises receiving data exchanged between the display device and one or more other devices.

Step 143 comprises determining whether the display device will likely display an overlay on top of the video content based on content of the one or more commands and/or a quantity and/or type and/or duration of the one or more commands. As described above, the further signal received in step 105 is indicative of these one or more commands.

Ideally, the system is able to decode the content of sniffed commands, but this may not always be possible. In that case, it may be possible to determine whether the display device will likely display an overlay on top of the video content based on a quantity and/or type and/or duration of the sniffed commands.
- Most IR remote controls transmit commands which are not encrypted (which does not mean that it might easily be known what they mean). Detecting whether a menu is being used may simply be a matter of tracking the type of commands being issued on IR over time:
   - If a burst (i.e. a large quantity during a short period) of commands of the same or a similar type is being sent, this could be the user turning the volume up and down (which in most cases is the same button).
   - If different buttons are used in a certain time frame, and therefore different types of commands are being sent, this could be an indication of the user navigating a menu. The higher diversity of buttons, the higher likelihood that a menu is being used (e.g. typing text).
- Duration of the total set of commands may also be a useful indication. For example, adjusting volume is usually quite a fast action. Navigating a menu might take longer and button presses tend to be spaced out with respect to each other, as the user reads the different entries in the list.

Machine learning may be used to learn over time which quantity and/or type and/or duration of commands corresponds to which type of menu and/or which size and/or shape of overlay.

Optionally, the determination made in step 143 may further be based on the data received in step 143. If the menus are contextual (e.g. a home-like menu that in addition to settings also loads top 5 news in the user's region), the system performing the method may infer the type of menu that was triggered by monitoring traffic among different sources.

As a first example, if BLE commands are sent to a TV after which a burst of WiFi data is transmitted to the TV, even if neither communication streams can be decoded, their time commonality may be a useful hint. As a second example, in the case of online games, a semi-constant stream of data might be expected to be transmitted to the display device running the game. However, most game menus do not require specific data to be loaded, so by monitoring drops of traffic towards the display device (possibly coupled to sniffed commands), it may be possible to determine if a menu is being displayed.

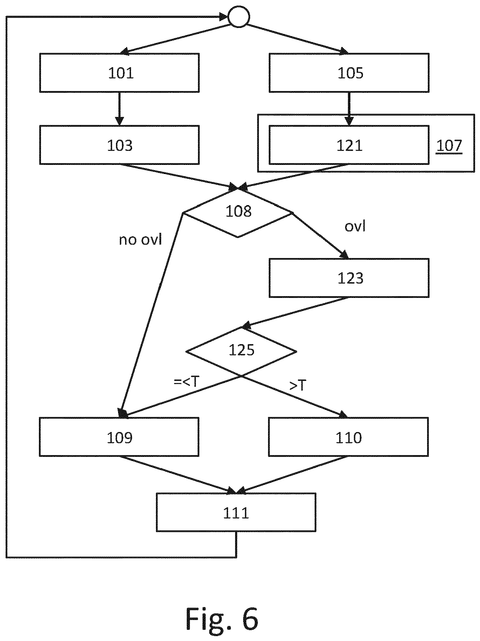

A fifth embodiment of the method of determining one or more light effects based on an analysis of video content and controlling one or more lighting devices to render the one or more light effects is shown in Fig. 6. In this fifth embodiment, compared to the first embodiment of Fig. 2, step 107 is implemented by a step 121 and steps 123 and 125 have been added.

Step 121 comprises determining, based on the further signal received in step 105, whether the display device will likely display an overlay on top of the video content. Amongst others, step 121 comprises determining whether the one or more commands instruct the display device to exit a menu. If it is determined in step 121 that the one or more commands instruct the display device to exit a menu, it is assumed that the display device will not display an overlay on top of the video content.

Exit commands typically indicate that a menu/overlay has disappeared from the screen and that the light effects should match the received video content. Determining whether an exit command is being transmitted may be done by looking for dedicated explicit commands (e.g. an "exit menu" button), by tracking certain type of commands (e.g. how many times a "back" button was pressed), or even by determining how long no commands have been sent (since e.g. some TV menus quite automatically after certain time of inactivity).

Furthermore, step 121 may comprise determining based on the further signal whether a user has confirmed an option in the menu and whether this confirmation has resulted in the menu being exited. For example, if a user navigates to the settings, changes something, and presses save, this may automatically result in the menu being exited.

In the embodiment of Fig. 6, if it was determined in step 107 that the display device will likely display an overlay on top of the video content, step 123 will be performed after step 108. Step 123 comprises determining a size of the overlay. Next, a step 125 comprises determining whether the size of the overlay, as determined in step 123, exceeds a threshold T. If so, step 110 is performed. If not, step 109 is performed. As a result, step 109 is performed if no overlay is 'detected' or if a smaller overlay is 'detected' and step 110 is performed if a larger overlay is 'detected'. If it was determined in step 121 that an exit command was sent, step 110 no longer needs to be performed and the method reverts to the normal mode, i.e. to performing step 109.

The embodiments of Figs. 2 to 6 differ from each other in multiple aspects, i.e. multiple steps have been added or replaced. In variations on these embodiments, only a subset of these steps is added or replaced and/or one or more steps are omitted. As first example, step 121 may be omitted from the embodiment of Fig. 6 and/or added to the embodiments of Figs. 2 to 5. As a second example, steps 123 and 125 may be omitted from the embodiment of Fig. 6 and/or added to the embodiments of Figs. 2 to 5. As a third example, step 143 of Fig. 5 may be added to the embodiment of Fig. 3.

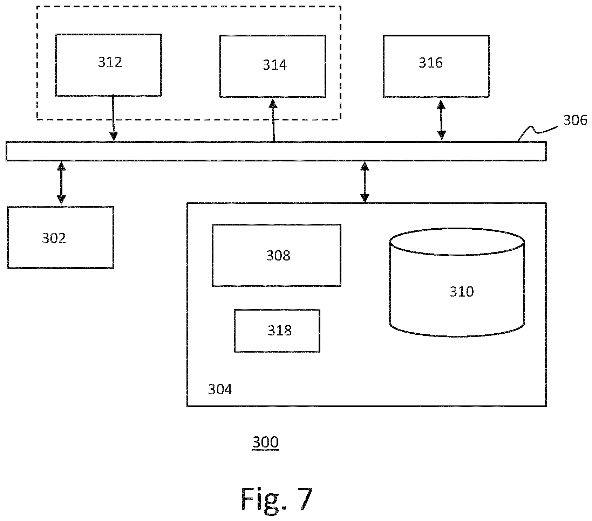

The methods of Figs. 2 to 6 may be performed by the HDMI module 11 of Fig. 1, for example. Fig. 7 depicts a block diagram illustrating an exemplary data processing system that may perform the method as described with reference to Figs. 2 to 6.

As shown in Fig. 7, the data processing system 300 may include at least one processor 302 coupled to memory elements 304 through a system bus 306. As such, the data processing system may store program code within memory elements 304. Further, the processor 302 may execute the program code accessed from the memory elements 304 via a system bus 306. In one aspect, the data processing system may be implemented as a computer that is suitable for storing and/or executing program code. It should be appreciated, however, that the data processing system 300 may be implemented in the form of any system including a processor and a memory that is capable of performing the functions described within this specification.

The memory elements 304 may include one or more physical memory devices such as, for example, local memory 308 and one or more bulk storage devices 310. The local memory may refer to random access memory or other non-persistent memory device(s) generally used during actual execution of the program code. A bulk storage device may be implemented as a hard drive or other persistent data storage device. The processing system 300 may also include one or more cache memories (not shown) that provide temporary storage of at least some program code in order to reduce the quantity of times program code must be retrieved from the bulk storage device 310 during execution. The processing system 300 may also be able to use memory elements of another processing system, e.g. if the processing system 300 is part of a cloud-computing platform.

Input/output (I/O) devices depicted as an input device 312 and an output device 314 optionally can be coupled to the data processing system. Examples of input devices may include, but are not limited to, a keyboard, a pointing device such as a mouse, a microphone (e.g. for voice and/or speech recognition), or the like. Examples of output devices may include, but are not limited to, a monitor or a display, speakers, or the like. Input and/or output devices may be coupled to the data processing system either directly or through intervening I/O controllers. Input devices and/or output devices may be connected via one or more HDMI ports, for example.

In an embodiment, the input and the output devices may be implemented as a combined input/output device (illustrated in Fig. 7 with a dashed line surrounding the input device 312 and the output device 314). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter 316 may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system 300, and a data transmitter for transmitting data from the data processing system 300 to said systems, devices and/or networks. Modems, cable modems, and Ethernet cards are examples of different types of network adapter that may be used with the data processing system 300.

The video signal, and metadata if applicable, may be obtained from an input device 312, via the network adapter 316, or from the memory elements 304, for example.

As pictured in Fig. 7, the memory elements 304 may store an application 318. In various embodiments, the application 318 may be stored in the local memory 308, the one or more bulk storage devices 310, or separate from the local memory and the bulk storage devices. It should be appreciated that the data processing system 300 may further execute an operating system (not shown in Fig. 7) that can facilitate execution of the application 318. The application 318, being implemented in the form of executable program code, can be executed by the data processing system 300, e.g., by the processor 302. Responsive to executing the application, the data processing system 300 may be configured to perform one or more operations or method steps described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 302 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art without departing from the scope of the present invention. The embodiments were chosen and described in order to best explain the principles and some practical applications of the present invention, and to enable others of ordinary skill in the art to understand the present invention for various embodiments with various modifications as are suited to the particular use contemplated.

## Claims

1. A system (11) for determining one or more light effects based on an analysis of video content and further arranged for controlling one or more lighting devices (31-34) to render said one or more light effects, said system (11) comprising:
at least one input interface (13) arranged for receiving a video signal, comprising said video content, and further arranged for receiving a further signal being indicative of one or more commands transmitted by a further device (45,29) to a display device (46);
at least one output interface (14) arranged for outputting said video signal to a display device and further arranged for controlling said one or more lighting devices (31-34); and
at least one processor (15) configured to:
- receive said video signal via said at least one input interface (13),
- output, via said at least one output interface (14), said video signal to said display device (46) for displaying said video content,
- receive said further signal via said at least one input interface (13), said processor **characterized by** being configured to:
- determine, based on said further signal, whether said display device (46) will likely display an overlay on top of said video content,
- analyze said video content, determine said one or more light effects based on said analysis of said video content in dependence on whether said display device (46) will likely display an overlay on top of said video content, and
- control, via said at least one output interface (14), said one or more lighting devices (31-34) to render said determined one or more light effects.

2. A system (11) as claimed in claim 1, wherein said at least one processor (15) is configured to, upon determining that said display device (46) will likely display an overlay on top of said video content, control said one or more lighting devices (31-34) to stop rendering light.

3. A system (11) as claimed in claim 1 or 2, wherein said at least one processor (15) is configured to, upon determining that said display device (46) will likely display an overlay on top of said video content, determine said one or more light effects such that a noticeability of said one or more light effects is gradually reduced.

4. A system (11) as claimed in claim 1 or 2, wherein said at least one processor (15) is configured to, upon determining that said display device (46) will likely display an overlay on top of said video content, determine one or more default and/or user-defined light effects, and control, via said at least one output interface (14), said one or more lighting devices (31-34) to render said one or more default and/or user-defined light effects.

5. A system (11) as claimed in claim 1 or 2, wherein said at least one processor (15) is configured to, upon determining that said display device (46) will likely display an overlay on top of said video content, determine one or more further light effects associated with said overlay, and control, via said at least one output interface (14), said one or more lighting devices (31-34) to render said one or more further light effects.

6. A system (11) as claimed in claim 1 or 2, wherein said at least one processor (15) is configured to, upon determining that said one or more commands instruct said display device (46) to exit a menu, determine said one or more light effects based on said analysis of said video content and control said one or more lighting devices (31-34) to render said one or more light effects.

7. A system (11) as claimed in claim 1 or 2, wherein said at least one processor (15) is configured to determine said one or more light effects based on said analysis of said video content further in dependence on a size and/or shape of said overlay.

8. A system (11) as claimed in claim 1 or 2, wherein said at least one processor (15) is configured to determine whether said display device (46) will likely display an overlay on top of said video content further based on data exchanged between said display device (46) and one or more other devices.

9. A system (11) as claimed in claim 1 or 2, wherein said at least one processor (15) is configured to determine whether said display device (46) will likely display an overlay on top of said video content based on content of said one or more commands.

10. A system (11) as claimed in claim 1 or 2, wherein said at least one processor (15) is configured to determine whether said display device (46) will likely display an overlay on top of said video content based on a quantity and/or type and/or duration of said one or more commands.

11. A system as claimed in claim 1 or 2, wherein said at least one processor (15) is configured to, upon determining that said display device (46) will likely display an overlay on top of said video content, determine one or more further light effects based on said analysis of said video content and based on content of said overlay and control, via said at least one output interface (14), said one or more lighting devices (31-34) to render said one or more further light effects.

12. A method for determining one or more light effects based on an analysis of video content and further for controlling one or more lighting devices to render said one or more light effects, said method comprising:
- receiving (101) a video signal, said video signal comprising said video content;
- outputting (103) said video signal to a display device for displaying said video content,
- receiving (105) a further signal, said further signal being indicative of one or more commands transmitted by a further device to said display device; said method **characterized by**:
- determining (107), based on said further signal, whether said display device will likely display an overlay on top of said video content;
- analyzing said video content, determining (109) said one or more light effects based on said analysis of said video content in dependence on whether said display device will likely display an overlay on top of said video content; and
- controlling (111) said one or more lighting devices to render said determined one or more light effects.

13. A computer program product for a computing device, the computer program product comprising computer program code to perform the method of claim 12 when the computer program product is run on a processing unit of the computing device.

## Patentansprüche

1. System (11) zum Bestimmen eines oder mehrerer Lichteffekte auf der Grundlage einer Analyse von Videoinhalten und ferner zum Steuern einer oder mehrerer Beleuchtungsvorrichtungen (31-34) zum Wiedergeben des einen oder der mehreren Lichteffekte eingerichtet ist, wobei das System (11) umfasst:
mindestens eine Eingabeschnittstelle (13), die zum Empfangen eines Videosignals, das den Videoinhalt umfasst, und die ferner zum Empfangen eines weiteren Signals, das einen oder mehrere Befehle anzeigt, die von einer weiteren Vorrichtung (45, 29) an eine Anzeigevorrichtung (46) übertragen werden, angeordnet ist;
mindestens eine Ausgabeschnittstelle (14), die zum Ausgeben des Videosignals an eine Anzeigevorrichtung und ferner zum Steuern der einen oder mehreren Beleuchtungsvorrichtungen (31-34) angeordnet ist; und
mindestens einen Prozessor (15), der konfiguriert ist zum:
- Empfangen des Videosignals über die mindestens eine Eingabeschnittstelle (13),
- Ausgeben des Videosignals über die mindestens eine Ausgabeschnittstelle (14) an die Anzeigevorrichtung (46) zum Anzeigen des Videoinhalts,
- Empfangen des weiteren Signals über die mindestens eine Eingabeschnittstelle (13), wobei der Prozessor
**dadurch gekennzeichnet ist, dass** er konfiguriert ist zum:
- auf der Grundlage des weiteren Signals Bestimmen, ob die Anzeigevorrichtung (46) wahrscheinlich eine Überlagerung über dem Videoinhalt anzeigen wird,
- Analysieren des Videoinhalts, Bestimmen des einen oder der mehreren Lichteffekte auf der Grundlage der Analyse des Videoinhalts in Abhängigkeit davon, ob die Anzeigevorrichtung (46) wahrscheinlich eine Überlagerung über dem Videoinhalt anzeigen wird, und
- über die mindestens eine Ausgabeschnittstelle (14) Steuern der einen oder mehreren Beleuchtungsvorrichtungen (31-34), um den einen oder die mehreren bestimmten Lichteffekte wiederzugeben.

2. System (11) nach Anspruch 1, wobei der mindestens eine Prozessor (15) so konfiguriert ist, dass er nach dem Bestimmen, dass die Anzeigevorrichtung (46) wahrscheinlich eine Überlagerung über dem Videoinhalt anzeigen wird, die eine oder die mehreren Beleuchtungsvorrichtungen (31-34) so steuert, dass die Lichtwiedergabe gestoppt wird.

3. System (11) nach Anspruch 1 oder 2, wobei der mindestens eine Prozessor (15) so konfiguriert ist, dass er nach dem Bestimmen, dass die Anzeigevorrichtung (46) wahrscheinlich eine Überlagerung über dem Videoinhalt anzeigen wird, den einen oder die mehreren Lichteffekte so bestimmt, dass die Auffälligkeit des einen oder der mehreren Lichteffekte schrittweise verringert wird.

4. System (11) nach Anspruch 1 oder 2, wobei der mindestens eine Prozessor (15) so konfiguriert ist, dass er nach dem Bestimmen, dass die Anzeigevorrichtung (46) wahrscheinlich eine Überlagerung über dem Videoinhalt anzeigen wird, einen oder mehrere standardmäßige und/oder benutzerdefinierte Lichteffekte bestimmt und über die mindestens eine Ausgabeschnittstelle (14) die eine oder die mehreren Beleuchtungsvorrichtungen (31-34) steuert, um den einen oder die mehreren standardmäßigen und/oder benutzerdefinierten Lichteffekte wiederzugeben.

5. System (11) nach Anspruch 1 oder 2, wobei der mindestens eine Prozessor (15) so konfiguriert ist, dass er nach dem Bestimmen, dass die Anzeigevorrichtung (46) wahrscheinlich eine Überlagerung über dem Videoinhalt anzeigen wird, einen oder mehrere weitere Lichteffekte bestimmt, die mit der Überlagerung verknüpft sind, und über die mindestens eine Ausgabeschnittstelle (14) die eine oder die mehreren Beleuchtungsvorrichtungen (31-34) steuert, um den einen oder die mehreren weiteren Lichteffekte wiederzugeben.

6. System (11) nach Anspruch 1 oder 2, wobei der mindestens eine Prozessor (15) so konfiguriert ist, dass er, nach dem Bestimmen, dass der eine oder die mehreren Befehle die Anzeigevorrichtung (46) anweisen, ein Menü zu verlassen, den einen oder die mehreren Lichteffekte auf der Grundlage der Analyse des Videoinhalts bestimmt und die eine oder mehrere Beleuchtungsvorrichtung (31-34) steuert, um den einen oder die mehreren Lichteffekte wiederzugeben.

7. System (11) nach Anspruch 1 oder 2, wobei der mindestens eine Prozessor (15) so konfiguriert ist, dass er den einen oder die mehreren Lichteffekte auf der Grundlage der Analyse des Videoinhalts ferner in Abhängigkeit von einer Größe und/oder Form der Überlagerung bestimmt.

8. System (11) nach Anspruch 1 oder 2, wobei der mindestens eine Prozessor (15) dazu konfiguriert ist, anhand der zwischen der Anzeigevorrichtung (46) und einer oder mehreren anderen Vorrichtungen ausgetauschten Daten zu bestimmen, ob die Anzeigevorrichtung (46) wahrscheinlich eine Überlagerung über dem Videoinhalt anzeigen wird.

9. System (11) nach Anspruch 1 oder 2, wobei der mindestens eine Prozessor (15) so konfiguriert ist, dass er auf der Grundlage des Inhalts des einen oder der mehreren Befehle bestimmt, ob die Anzeigevorrichtung (46) wahrscheinlich eine Überlagerung über dem Videoinhalt anzeigen wird.

10. System (11) nach Anspruch 1 oder 2, wobei der mindestens eine Prozessor (15) dazu konfiguriert ist, basierend auf der Menge und/oder Art und/oder Dauer des einen oder der mehreren Befehle zu bestimmen, ob die Anzeigevorrichtung (46) wahrscheinlich eine Überlagerung über dem Videoinhalt anzeigen wird.

11. System nach Anspruch 1 oder 2, wobei der mindestens eine Prozessor (15) so konfiguriert ist, dass er nach dem Bestimmen, dass die Anzeigevorrichtung (46) wahrscheinlich eine Überlagerung über dem Videoinhalt anzeigen wird, auf der Grundlage der Analyse des Videoinhalts und auf der Grundlage des Inhalts der Überlagerung einen oder mehrere weitere Lichteffekte bestimmt und über die mindestens eine Ausgabeschnittstelle (14) die eine oder die mehreren Beleuchtungsvorrichtungen (31-34) steuert, um den einen oder die mehreren weiteren Lichteffekte wiederzugeben.

12. Verfahren zum Bestimmen eines oder mehrerer Lichteffekte auf der Grundlage einer Analyse von Videoinhalten und ferner zum Steuern einer oder mehrerer Beleuchtungsvorrichtungen, um den einen oder die mehreren Lichteffekte wiederzugeben, wobei das Verfahren umfasst:
- Empfangen (101) eines Videosignals, wobei das Videosignal den Videoinhalt umfasst;
- Ausgeben (103) des Videosignals an eine Anzeigevorrichtung zum Anzeigen des Videoinhalts,
- Empfangen (105) eines weiteren Signals, wobei das weitere Signal einen oder mehrere Befehle anzeigt, die von einer weiteren Vorrichtung an die Anzeigevorrichtung übertragen werden; wobei das Verfahren
**gekennzeichnet ist durch:**
- Bestimmen (107) auf der Grundlage des weiteren Signals, ob die Anzeigevorrichtung wahrscheinlich eine Überlagerung über dem Videoinhalt anzeigen wird;
- Analysieren des Videoinhalts, Bestimmen (109) des einen oder der mehreren Lichteffekte auf der Grundlage der Analyse des Videoinhalts in Abhängigkeit davon, ob die Anzeigevorrichtung wahrscheinlich eine Überlagerung über dem Videoinhalt anzeigen wird; und
- Steuern (111) der einen oder mehreren Beleuchtungsvorrichtungen, um den einen oder die mehreren Lichteffekte wiederzugeben.

13. Computerprogrammprodukt für eine Rechenvorrichtung, das Computerprogrammprodukt umfassend Computerprogrammcode, um das Verfahren nach Anspruch 12 durchzuführen, wenn das Computerprogrammprodukt auf einer Verarbeitungseinheit der Rechenvorrichtung ausgeführt wird.

## Revendications

1. Système (11) permettant de déterminer un ou plusieurs effets de lumière sur la base d'une analyse du contenu vidéo et agencé en outre pour la commande d'un ou plusieurs dispositifs d'éclairage (31-34) pour qu'ils restituent ledit ou lesdits effets de lumière, ledit système (11) comprenant :
au moins une interface d'entrée (13) agencée pour recevoir un signal vidéo, comprenant ledit contenu vidéo, et agencée en outre pour recevoir un signal supplémentaire indiquant une ou plusieurs commandes transmises par un dispositif supplémentaire (45,29) à un dispositif d'affichage (46) ;
au moins une interface de sortie (14) agencée pour émettre ledit signal vidéo vers un dispositif d'affichage et agencée en outre pour commander ledit un ou plusieurs dispositifs d'éclairage (31-34) ; et
au moins un processeur (15) configuré pour :
- recevoir ledit signal vidéo par l'intermédiaire de ladite au moins une interface d'entrée (13),
- émettre, par l'intermédiaire de ladite au moins une interface de sortie (14), ledit signal vidéo vers ledit dispositif d'affichage (46) pour afficher ledit contenu vidéo,
- recevoir ledit signal supplémentaire par l'intermédiaire de ladite au moins une interface d'entrée (13), ledit processeur **étant caractérisé par le fait qu'**il est configuré pour :
- déterminer, sur la base dudit signal supplémentaire, si ledit dispositif d'affichage (46) affichera probablement une superposition au-dessus dudit contenu vidéo,
- analyser ledit contenu vidéo, déterminer ledit un ou plusieurs effets de lumière sur la base de ladite analyse dudit contenu vidéo en fonction du fait que ledit dispositif d'affichage (46) affichera probablement une superposition au-dessus dudit contenu vidéo, et
- commander, par l'intermédiaire de ladite au moins une interface de sortie (14), ledit ou lesdits dispositifs d'éclairage (31-34) afin de restituer ledit ou lesdits effets de lumière déterminés.

2. Système (11) selon la revendication 1, dans lequel ledit au moins un processeur (15) est configuré pour, après avoir déterminé que ledit dispositif d'affichage (46) affichera probablement une superposition au-dessus dudit contenu vidéo, commander ledit ou lesdits dispositifs d'éclairage (31-34) pour qu'ils arrêtent de restituer la lumière.

3. Système (11) selon la revendication 1 ou 2, dans lequel ledit au moins un processeur (15) est configuré pour, après avoir déterminé que ledit dispositif d'affichage (46) affichera probablement une superposition au-dessus dudit contenu vidéo, déterminer ledit ou lesdits effets de lumière de telle sorte qu'une perceptibilité dudit ou desdits effets de lumière est progressivement réduite.

4. Système (11) selon la revendication 1 ou 2, dans lequel ledit au moins un processeur (15) est configuré pour, après avoir déterminé que ledit dispositif d'affichage (46) affichera probablement une superposition au-dessus dudit contenu vidéo, déterminer un ou plusieurs effets de lumière par défaut et/ou définis par l'utilisateur, et commander, par l'intermédiaire de ladite au moins une interface de sortie (14), ledit ou lesdits dispositifs d'éclairage (31-34) pour qu'ils restituent ledit ou lesdits effets de lumière par défaut et/ou définis par l'utilisateur.

5. Système (11) selon la revendication 1 ou 2, dans lequel ledit au moins un processeur (15) est configuré pour, après avoir déterminé que ledit dispositif d'affichage (46) affichera probablement une superposition au-dessus dudit contenu vidéo, déterminer un ou plusieurs effets de lumière supplémentaires associés à ladite superposition, et commander, par l'intermédiaire de ladite au moins une interface de sortie (14), ledit ou lesdits dispositifs d'éclairage (31-34) pour qu'ils restituent ledit ou lesdits effets de lumière supplémentaires.

6. Système (11) selon la revendication 1 ou 2, dans lequel ledit au moins un processeur (15) est configuré pour, après avoir déterminé que ladite ou lesdites commandes ordonnent audit dispositif d'affichage (46) de quitter un menu, déterminer ledit ou lesdits effets de lumière sur la base de ladite analyse dudit contenu vidéo et commander ledit ou lesdits dispositifs d'éclairage (31-34) pour qu'ils restituent ledit ou lesdits effets de lumière.

7. Système (11) selon la revendication 1 ou 2, dans lequel ledit au moins un processeur (15) est configuré pour déterminer ledit ou lesdits effets de lumière sur la base de ladite analyse dudit contenu vidéo, en fonction en outre d'une taille et/ou d'une forme de ladite superposition.

8. Système (11) selon la revendication 1 ou 2, dans lequel ledit au moins un processeur (15) est configuré pour déterminer si ledit dispositif d'affichage (46) affichera probablement une superposition au-dessus dudit contenu vidéo sur la base en outre des données échangées entre ledit dispositif d'affichage (46) et un ou plusieurs autres dispositifs.

9. Système (11) selon la revendication 1 ou 2, dans lequel ledit au moins un processeur (15) est configuré pour déterminer si ledit dispositif d'affichage (46) affichera probablement une superposition au-dessus dudit contenu vidéo sur la base du contenu de ladite ou desdites commandes.

10. Système (11) selon la revendication 1 ou 2, dans lequel ledit au moins un processeur (15) est configuré pour déterminer si ledit dispositif d'affichage (46) affichera probablement une superposition au-dessus dudit contenu vidéo sur la base d'une quantité et/ou d'un type et/ou d'une durée de ladite ou desdites commandes.

11. Système selon la revendication 1 ou 2, dans lequel ledit au moins un processeur (15) est configuré pour, après avoir déterminé que ledit dispositif d'affichage (46) affichera probablement une superposition sur ledit contenu vidéo, déterminer un ou plusieurs effets de lumière supplémentaires sur la base de ladite analyse dudit contenu vidéo et sur la base du contenu de ladite superposition et commander, par l'intermédiaire de ladite au moins une interface de sortie (14), ledit ou lesdits dispositifs d'éclairage (31-34) pour qu'ils restituent ledit ou lesdits effets de lumière supplémentaires.

12. Procédé permettant de déterminer un ou plusieurs effets de lumière sur la base d'une analyse du contenu vidéo et permettant en outre de commander un ou plusieurs dispositifs d'éclairage pour qu'ils restituent ledit ou lesdits effets de lumière, ledit procédé comprenant :
- la réception (101) d'un signal vidéo, ledit signal vidéo comprenant ledit contenu vidéo ;
- l'émission (103) dudit signal vidéo vers un dispositif d'affichage pour afficher ledit contenu vidéo,
- la réception (105) d'un signal supplémentaire, ledit signal supplémentaire indiquant une ou plusieurs commandes transmises par un dispositif supplémentaire audit dispositif d'affichage ; ledit procédé**caractérisé par :**
- la détermination (107), sur la base dudit signal supplémentaire, si ledit dispositif d'affichage affichera probablement une superposition au-dessus dudit contenu vidéo ;
- l'analyse dudit contenu vidéo, la détermination (109) dudit ou desdits effets de lumière sur la base de ladite analyse dudit contenu vidéo en fonction du fait que ledit dispositif d'affichage affichera probablement une superposition au-dessus dudit contenu vidéo ; et
- la commande (111) dudit ou desdits dispositifs d'éclairage pour qu'ils restituent un ou plusieurs effets de lumière déterminés.

13. Produit-programme informatique destiné à un dispositif informatique, le produit-programme informatique comprenant un code de programme informatique pour réaliser le procédé selon la revendication 12 lorsque le produit-programme informatique est exécuté sur une unité de traitement du dispositif informatique.
